# FASCICULE DE BREVET EUROPEEN

(11) **EP 3 707 429 B1**
(45) Date de publication et mention de la délivrance du brevet: **30.11.2022**
(21) Numéro de dépôt: 18811331.0
(22) Date de dépôt: 09.10.2018
(51) Int. Cl.: F21S 41/19, F21S 41/143, F21S 41/63, F21S 41/657, F21S 41/663, F21S 41/148, B60Q 1/08, F21W 102/13, F21W 102/17

(54) **DISPOSITIF D'ÉCLAIRAGE À FAISCEAU PRINCIPAL ET FAISCEAU ÉTROIT PRODUIT PAR UN ENSEMBLE ORIENTABLE EN FONCTION DE LA POSITION D'UN OBSTACLE DÉTECTÉ DEVANT UN VÉHICULE**
BELEUCHTUNGSGERÄT MIT EINEM HAUPTSTRAHL UND EINEM SCHMALEN NEBENSTRAHL, DER VON EINEM ZUSAMMENBAU GENERIERT WIRD, DER IN ABHÄNGIGKEIT DER POSITION EINES DETEKTIERTEN HINDERNISSES IM VORFELD EINES FAHRZEUGS ORIENTIERBAR IST
ILLUMINATION DEVICE COMPRISING A MAIN BEAM AND A NARROW AUXILIARY BEAM GENERATED BY AN ASSEMBLY THAT CAN BE ORIENTED FOLLOWING THE POSITION OF AN OBSTACLE DETECTED IN FRONT OF A VEHICLE

(30) Priorité: 08.11.2017 FR 1760472
(43) Date de publication de la demande: 16.09.2020
(73) Titulaire: PSA Automobiles SA, 78300 Poissy (FR)
(72) Inventeur: GONCALVES, Whilk Marcelino, 75013 Paris (FR); STEE, Lucien, 91700 Ste Genevieve Des Bois (FR); MOYNIER, Gilles, 72000 Le Mans (FR); DEGUINES, Bertrand, 78540 Vernouillet (FR)
(86) Numéro de dépôt international: PCT/FR2018/052488
(87) Numéro de publication internationale: WO 2019/092335

(56) Documents cités:
- EP-A1- 1 818 601
- EP-A1- 2 128 521
- EP-A2- 2 623 373
- FR-A1- 2 861 834
- JP-A- 2014 154 253

## Description

L'invention concerne les véhicules, éventuellement de type automobile, et plus précisément les dispositifs d'éclairage qui équipent de tels véhicules.

De nombreux véhicules, généralement de type automobile, comprennent dans une partie avant deux dispositifs d'éclairage principaux chargés d'assurer une fonction photométrique d'éclairage principale, par exemple de type feu de croisement (ou code), feu antibrouillard ou feu de route.

Certains de ces véhicules comprennent également au moins un dispositif d'éclairage auxiliaire qui est chargé d'éclairer dynamiquement, au moyen d'un faisceau lumineux étroit orientable, un obstacle détecté devant eux par des moyens d'analyse embarqués. L'éclairage de cet obstacle (éventuellement un être vivant) est destiné à attirer l'attention du conducteur sur lui et ainsi permettre au conducteur de disposer de plus de temps pour effectuer une manœuvre destinée à l'éviter. Un tel dispositif d'éclairage auxiliaire assure une fonction qui est parfois appelée « marking light », et est par exemple décrit dans le document brevet EP 2420986.

Le document brevet EP 1818601 décrit un projecteur de véhicule apte à former un motif de distribution de lumière. Le document brevet EP 2128521 décrit un projecteur de véhicule, la source lumineuse étant montée mobile sensiblement dans le plan focal objet selon une direction apte à provoquer le pivotement du faisceau lumineux, et notamment orthogonale à l'axe de pivotement.

Comme le sait l'homme de l'art, ces dispositifs d'éclairage auxiliaires ont un inconvénient principal. En effet, ils viennent ajouter leur encombrement, leur poids, leur faisceau électrique d'alimentation et de commande, et leur coût à ceux des dispositifs d'éclairage principaux. Il en résulte qu'ils ne sont implantables que dans certains véhicules relativement volumineux et relativement onéreux. De plus, la présence de dispositif(s) d'éclairage auxiliaire(s) en supplément des dispositifs d'éclairage principaux peut affecter le style du véhicule.

L'invention a notamment pour but d'améliorer la situation.

Elle propose notamment à cet effet un dispositif d'éclairage, d'une part, destiné à équiper un véhicule comprenant des moyens d'analyse analysant une zone située devant lui, et, d'autre part, comportant une première source générant des premiers photons et un réflecteur réfléchissant les premiers photons générés vers la zone de sorte qu'ils forment un premier faisceau lumineux assurant une fonction photométrique d'éclairage.

Ce dispositif d'éclairage se caractérise par le fait qu'il comprend également :
- un ensemble installé devant le réflecteur, positionnable dans différentes positions angulaires, et comportant une seconde source générant des seconds photons et une lentille intercalée entre la seconde source et la zone et formant avec les seconds photons générés un second faisceau lumineux étroit et pointant une sous-zone de la zone fonction d'une position angulaire de l'ensemble, et
- des moyens de contrôle déterminant la position angulaire de l'ensemble en cas de détection d'un obstacle dans une sous-zone de position connue par rapport à un repère du véhicule; les moyens de contrôle déterminant en outre une position angulaire de l'ensemble dans laquelle ladite lentille est éloignée d'un lieu de passage dudit premier faisceau lumineux afin de la ranger lorsque ladite seconde source ne génère pas de seconds photons.

Grâce à l'invention, le dispositif d'éclairage assure non seulement une fonction photométrique d'éclairage principale, mais également une fonction photométrique d'éclairage auxiliaire de type marking light (à faisceau lumineux étroit orientable), sans que son encombrement ne soit augmenté significativement par rapport à un dispositif d'éclairage dépourvu de fonction marking light.

Le dispositif d'éclairage selon l'invention peut comporter d'autres caractéristiques qui peuvent être prises séparément ou en combinaison, et notamment :
- son ensemble peut également comprendre des moyens optiques intercalés entre la seconde source et la lentille et canalisant les seconds photons générés vers la lentille ;
- sa première source peut être installée dans une partie supérieure du réflecteur ;
- il peut comprendre un support auquel est solidarisé fixement l'ensemble et un moteur électrique entraînant en rotation un axe auquel est solidarisé fixement le support. Dans ce cas, ses moyens de contrôle déterminent une position angulaire de l'axe qui est fonction de la position connue de la sous-zone et qui définit la position angulaire de l'ensemble ;
- la fonction photométrique d'éclairage peut être choisie parmi une fonction de feu de croisement, une fonction de feu antibrouillard, une fonction de feu de route et une fonction de feu de jour.

L'invention propose également un véhicule, éventuellement de type automobile, et comprenant des moyens d'analyse analysant une zone située devant lui et au moins un dispositif d'éclairage du type de celui présenté ci-avant.

Par exemple, ce véhicule peut comprendre deux dispositifs d'éclairage installés respectivement dans des parties avant droite et gauche.

D'autres caractéristiques et avantages de l'invention apparaîtront à l'examen de la description détaillée ci-après, et des dessins annexés, sur lesquels :
- la figure 1 illustre schématiquement et fonctionnellement une route comprenant une voie de circulation sur laquelle circule un véhicule comprenant un dispositif d'éclairage selon l'invention,
- la figure 2 illustre schématiquement et fonctionnellement, dans une vue en coupe dans un plan vertical (XZ), un exemple de réalisation d'un dispositif d'éclairage selon l'invention, et
- la figure 3 illustre schématiquement et fonctionnellement, dans une vue en coupe dans un plan horizontal (XY), une partie du dispositif d'éclairage de la figure 2, avec son ensemble placé dans une position angulaire centrale.

L'invention a notamment pour but de proposer un dispositif d'éclairage DE à fonction photométrique d'éclairage principale et fonction photométrique d'éclairage auxiliaire de type marking light, et destiné à équiper un véhicule V comprenant des moyens d'analyse MA chargés d'analyser une partie avant de son environnement.

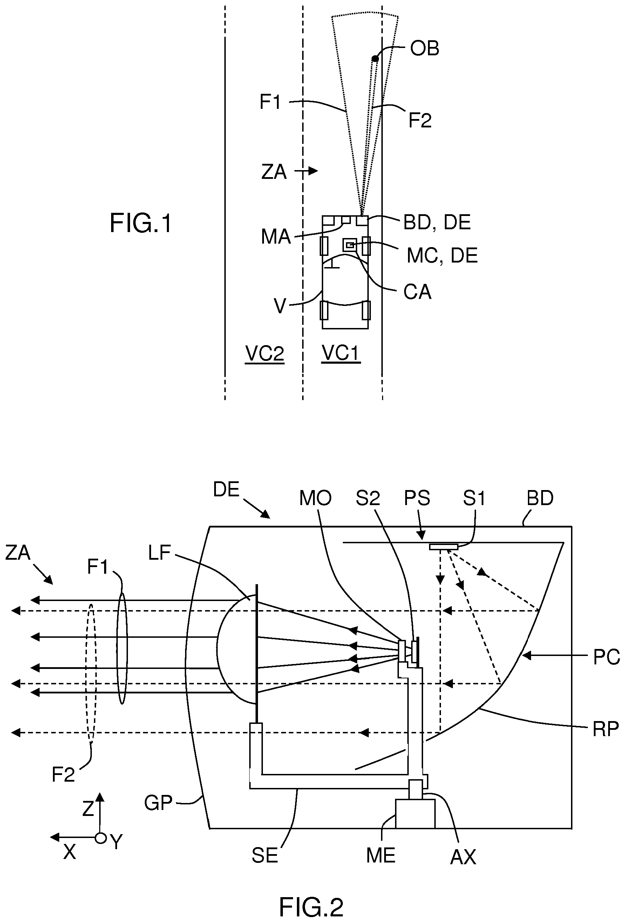

Dans ce qui suit, on considère, à titre d'exemple non limitatif, que le véhicule V est de type automobile. Il s'agit par exemple d'une voiture, comme illustré non limitativement sur la figure 1. Mais l'invention n'est pas limitée à ce type de véhicule. Elle concerne en effet tout type de véhicule pouvant circuler sur des voies de circulation terrestres.

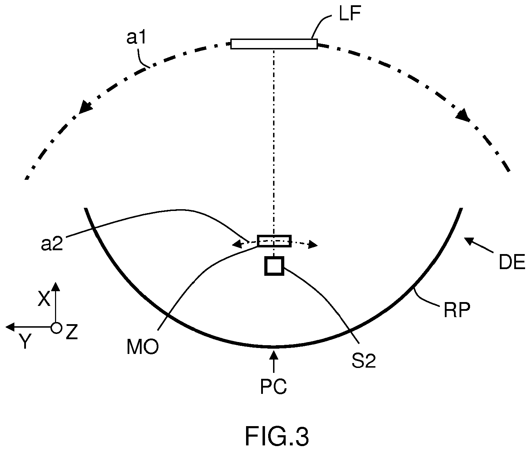

Sur les figures 2 et 3, la direction X est une direction dite longitudinale du fait qu'elle est parallèle à un côté longitudinal du véhicule, la direction Y est une direction dite transversale du fait qu'elle est perpendiculaire aux côtés longitudinaux du véhicule V et donc perpendiculaire à la direction longitudinale X, et la direction Z est une direction verticale, perpendiculaire aux directions longitudinale X et transversale Y.

Sur la figure 1 se trouve schématiquement et fonctionnellement représentée une route comprenant des première VC1 et seconde VC2 voies de circulation. Sur la première voie de circulation VC1 circule un véhicule V comprenant des moyens d'analyse de l'environnement MA et au moins un dispositif d'éclairage DE selon l'invention.

Les moyens d'analyse de l'environnement MA du véhicule V sont chargés, au moins, d'acquérir et d'analyser des données qui sont représentatives d'une zone ZA située devant lui (V) afin de détecter des obstacles OB, et notamment des êtres vivants (humains et animaux), et d'estimer les positions relatives de ces derniers (OB) par rapport à un repère attaché au véhicule V.

Ces moyens d'analyse MA peuvent, par exemple, comprendre au moins une caméra numérique. Mais ils pourraient comprendre au moins une caméra infrarouge ou au moins un radar ou encore au moins un laser de balayage.

Comme illustré sur la figure 1, un dispositif d'éclairage DE est installé dans une partie avant d'un véhicule V. Ici, il (DE) est installé dans la partie avant droite du véhicule V. Mais il pourrait être installé dans la partie avant gauche du véhicule V. On notera que le véhicule V pourrait également comprendre deux dispositifs d'éclairage DE installés respectivement dans des parties avant droite et gauche. Un dispositif d'éclairage DE pourrait être également installé dans une partie centrale avant du véhicule V (par exemple dans la calandre).

Un dispositif d'éclairage DE, selon l'invention, comprend, comme illustré sur la figure 2, au moins une première source de photons S1, un réflecteur RP, un ensemble comportant au moins une seconde source de photons S2 et une lentille LF, et des moyens de contrôle MC.

On notera que le dispositif d'éclairage DE comprend également un boîtier BD et une glace de protection GP transparente, qui délimitent un espace interne dans lequel sont installés au moins la première source de photons S1, le réflecteur RP et l'ensemble. La glace de protection GP est située à l'interface avec l'extérieur, et les photons sortent du dispositif d'éclairage DE par cette dernière (GP).

La première source S1 est chargée de générer des premiers photons en direction du réflecteur RP (comme cela est matérialisé en tirets sur la figure 2). Elle comprend, par exemple, au moins une diode électroluminescente (ou LED). En variante, elle pourrait comporter au moins une diode laser ou un laser à gaz ou encore une lampe (ou ampoule).

On notera que cette première source S1 peut être éventuellement montée sur un radiateur destiné à favoriser la dissipation des calories qu'elle produit lorsqu'elle génère des premiers photons.

On notera également que dans l'exemple illustré non limitativement sur la figure 2 la première source S1 est installée dans une partie supérieure PS du réflecteur RP. Mais cela n'est pas obligatoire. En effet, dans une variante de réalisation elle pourrait être installée dans une partie inférieure du réflecteur RP.

Le réflecteur RP est agencé de manière à réfléchir les premiers photons, générés par la première source S1, vers la glace de protection GP et la zone ZA, de sorte qu'ils forment un premier faisceau lumineux F1 assurant une fonction photométrique d'éclairage dite principale.

Par exemple, cette fonction photométrique d'éclairage principale peut être choisie parmi une fonction de feu de croisement (ou code), une fonction de feu antibrouillard, une fonction de feu de route et une fonction de feu de jour (ou DRL (pour « Daytime running Light (or Lamp) » - signalisation lumineuse allumée automatiquement lorsque le véhicule est mis en fonctionnement pendant le jour)). Dans ce cas, le dispositif d'éclairage DE constitue un projecteur (ou phare) avant.

Par exemple, le réflecteur RP peut définir ce que l'homme de l'art appelle une surface complexe, à base en forme de parabole. Ce type de surface peut, par exemple, être constitué par des secteurs de forme générale rectangulaire.

L'ensemble est installé devant le réflecteur RP, c'est-à-dire en aval de ce dernier (RP) par rapport au sens de propagation des photons se dirigeant vers l'extérieur. En d'autres termes, il est installé entre le réflecteur RP et la glace de protection GP.

Cet ensemble est positionnable dans différentes positions angulaires. En d'autres termes, lorsque l'on déplace angulairement l'ensemble, tous ses constituants sont déplacés angulairement simultanément.

La seconde source S2 est chargée de générer des seconds photons en direction de la lentille LF (comme cela est matérialisé en traits continus sur la figure 2). Elle comprend, par exemple, au moins une diode électroluminescente (ou LED). En variante, elle pourrait comporter au moins une diode laser ou un laser à gaz ou encore une lampe (ou ampoule). Lorsque la seconde source S2 comprend plusieurs diodes électroluminescentes, ces dernières sont de préférence sensiblement alignées les unes au-dessus des autres suivant la direction verticale Z. Dans ce cas, la seconde source S2 est de préférence installée dans une position verticale.

On notera que cette seconde source S2 peut être éventuellement montée sur un radiateur destiné à favoriser la dissipation des calories qu'elle produit lorsqu'elle génère des seconds photons.

On notera également que le réflecteur RP peut, éventuellement, être agencé de sorte que sa partie centrale PC ne participe pas à la réflexion des premiers photons. On comprendra en effet que la présence de la seconde source S2 entre cette partie centrale PC et la glace de protection GP peut, éventuellement, empêcher cette partie centrale PC d'assurer une fonction de réflexion.

La lentille LF est intercalée entre la seconde source S2 et la zone ZA, en amont de la glace de protection GP par rapport au sens de propagation des photons se dirigeant vers l'extérieur. Elle est agencée de manière à former avec les seconds photons, générés par la seconde source S2, un second faisceau lumineux F2 étroit et pointant une sous-zone de la zone ZA qui est fonction d'une position angulaire de l'ensemble déterminée par les moyens de contrôle MC.

La lentille LF est par exemple de type asphérique plan-convexe (lentille de projection à l'infini). Au moins la seconde source S2 et la lentille LF assurent ainsi, ensemble, une fonction photométrique d'éclairage auxiliaire de type marking light.

Les moyens de contrôle MC sont agencés de manière à déterminer la position angulaire de l'ensemble en cas de détection d'un obstacle OB dans une sous-zone de la zone ZA dont la position est connue par rapport au repère précité du véhicule V. Cette dernière position est fournie par les moyens d'analyse de l'environnement MA. La position angulaire de l'ensemble est déterminée par rapport à une position angulaire de référence définie dans un repère rattaché au boîtier BD, sur un banc de calibrage ou sur un régloscope adapté à ce type de fonction d'éclairage.

Grâce à l'invention, dès que le niveau de luminosité à l'extérieur du véhicule V est inférieur à un seuil prédéfini, typiquement de nuit et avec d'autres contraintes particulières (comme par exemple un roulage dans une zone urbaine ou périurbaine au-dessous d'un seuil prédéfini de vitesse), et qu'un obstacle OB est détecté dans la zone ZA à une certaine position, les moyens de contrôle MC déterminent une position angulaire de l'ensemble permettant la formation d'un second faisceau lumineux F2 étroit et pointant vers la sous-zone de la zone ZA qui comprend la position de l'obstacle OB détecté (voir figure 1). L'ensemble est alors immédiatement placé dans cette position angulaire afin que le second faisceau lumineux F2 éclaire cette sous-zone et donc l'obstacle OB qui est placé dans cette dernière.

Sur la figure 3 se trouve schématiquement illustré un exemple non limitatif de position angulaire de l'ensemble permettant d'éclairer un obstacle détecté sensiblement parallèlement à l'axe longitudinal X du véhicule VA.

Comme illustré non limitativement sur les figures 2 et 3, l'ensemble peut également comprendre des moyens optiques MO intercalés entre la seconde source S2 et la lentille LF et agencés de manière à canaliser les seconds photons générés vers la lentille LF. Cette option permet de minimiser les pertes de seconds photons (qui ne participent alors pas au second faisceau lumineux F2) et les reflets indésirables.

Par exemple, les moyens optiques MO peuvent comprendre au moins une lentille convergente ou une combinaison de lentilles ayant une fonction équivalente de focalisation des photons issus de la seconde source S2.

On notera qu'afin que la lentille LF n'intercepte pas tout ou partie du premier faisceau lumineux F1 dans certaines positions angulaires de l'ensemble en fonctionnement, les moyens de contrôle MC déterminent une position angulaire de l'ensemble dans laquelle la lentille LF est éloignée du lieu de passage du premier faisceau lumineux F1 afin de la ranger lorsque la seconde source S2 ne génère pas de seconds photons. On comprendra que cela permet de « ranger » la lentille LF lorsque la fonction marking light n'est pas utilisée.

Les déplacements angulaires de l'ensemble (S2, LF, (MO)) peuvent se faire de différentes manières, et notamment au moyen d'un support SE et d'un moteur électrique ME. Plus précisément, et comme illustré non limitativement sur la figure 2, le dispositif d'éclairage DE peut comprendre un support SE auquel est solidarisé fixement l'ensemble (S2, LF, (MO)) et un moteur électrique ME entraînant en rotation un axe AX auquel est solidarisé fixement le support SE.

Dans ce cas, les moyens de contrôle MC déterminent une position angulaire de l'axe AX qui est fonction de la position connue de la sous-zone contenant l'obstacle OB détecté et qui définit la position angulaire de l'ensemble (S2, LF, (MO)). On comprendra qu'une fois que les moyens de contrôle MC ont déterminé une position angulaire de l'axe AX adaptée à la position connue de cet obstacle OB, ils déclenchent immédiatement le placement de l'axe AX dans cette position angulaire, ce qui place simultanément l'ensemble (S2, LF, (MO)) dans une position angulaire permettant au second faisceau lumineux F2 d'éclairer l'obstacle OB.

De préférence, et comme illustré sur la figure 2, l'axe AX est placé sous le centre de la seconde source S2 de sorte qu'une rotation de l'axe AX sur une fraction donnée d'un tour provoque une rotation sur elle-même de la seconde source S2 sur cette même fraction donnée de tour. En présence d'un tel agencement, la lentille LF et les éventuels moyens optiques MO sont également entraînés en rotation autour d'une droite passant par l'axe AX et la seconde source S2. Par conséquent, la lentille LF et les éventuels moyens optiques MO se déplacent respectivement suivant des premier a1 et second a2 arcs de cercle lorsque la seconde source S2 pivote sur elle-même (du fait de la rotation de l'axe AX). Cela permet d'avoir un second faisceau de lumière F2 constant en forme et en intensité quelle que soit la position angulaire de l'ensemble.

Le moteur électrique ME peut, par exemple, être de type pas-à-pas.

Par ailleurs, dans l'exemple illustré non limitativement sur la figure 2 le support SE passe en-dessous du réflecteur RP, mais dans une variante de réalisation il pourrait passer au-dessus du réflecteur RP.

On notera également que dans l'exemple illustré non limitativement sur les figures 1 et 2, les moyens de contrôle MC sont implantés dans un calculateur CA du véhicule V, qui assure éventuellement au moins une autre fonction. Mais les moyens de contrôle MC pourraient comprendre leur propre calculateur et être éventuellement logés dans le boîtier BD. Par conséquent, les moyens de contrôle MC peuvent être réalisés sous la forme de modules logiciels (ou informatiques ou encore « software »), ou d'une combinaison de modules logiciels et de composants électriques ou électroniques (ou « hardware »).

Le dispositif d'éclairage DE assure au sein d'un même boîtier non seulement une fonction photométrique d'éclairage principale, mais également une fonction photométrique d'éclairage auxiliaire de type marking light. De ce fait, ses encombrement et poids sont très peu supérieurs à ceux d'un dispositif d'éclairage dépourvu de fonction marking light. De plus, l'intégration des deux fonctions photométriques dans un même dispositif d'éclairage DE permet d'utiliser un faisceau électrique d'alimentation et de commande commun pour ces deux fonctions photométriques, et de ne pas affecter le style du véhicule.

## Revendications

1. Dispositif d'éclairage (DE) pour un véhicule (V) comprenant des moyens d'analyse (MA) analysant une zone (ZA) située devant lui (V), ledit dispositif (DA) comportant une première source (S1) générant des premiers photons et un réflecteur (RP) réfléchissant lesdits premiers photons générés vers ladite zone (ZA) de sorte qu'ils forment un premier faisceau lumineux (F1) assurant une fonction photométrique d'éclairage, **caractérisé en ce qu'**il comprend en outre i) un ensemble installé devant ledit réflecteur (RP), positionnable dans différentes positions angulaires, et comportant une seconde source (S2) générant des seconds photons et une lentille (LF) intercalée entre ladite seconde source (S2) et ladite zone (ZA) et formant avec lesdits seconds photons générés un second faisceau lumineux (F2) étroit et pointant une sous-zone de ladite zone (ZA) fonction d'une position angulaire dudit ensemble, et ii) des moyens de contrôle (MC) déterminant ladite position angulaire de l'ensemble en cas de détection d'un obstacle (OB) dans une sous-zone de position connue par rapport à un repère dudit véhicule (V), lesdits moyens de contrôle (MC) déterminant en outre une position angulaire de l'ensemble dans laquelle ladite lentille (LF) est éloignée d'un lieu de passage dudit premier faisceau lumineux (F1) afin de la ranger lorsque ladite seconde source (S2) ne génère pas de seconds photons.

2. Dispositif selon la revendication 1, **caractérisé en ce que** ledit ensemble comprend en outre des moyens optiques (MO) intercalés entre ladite seconde source (S2) et ladite lentille (LF) et canalisant lesdits seconds photons générés vers ladite lentille (LF).

3. Dispositif selon la revendication 1 ou 2, **caractérisé en ce que** ladite première source (S1) est installée dans une partie supérieure (PS) dudit réflecteur (RP).

4. Dispositif selon l'une des revendications 1 à 3, **caractérisé en ce qu'**il comprend un support (SE) auquel est solidarisé fixement ledit ensemble et un moteur électrique (ME) entraînant en rotation un axe (AX) auquel est solidarisé fixement ledit support (SE), et **en ce que** lesdits moyens de contrôle (MC) déterminent une position angulaire dudit axe (AX) fonction de ladite position connue de la sous-zone et définissant ladite position angulaire de l'ensemble.

5. Dispositif selon l'une des revendications 1 à 4, **caractérisé en ce que** ladite fonction photométrique d'éclairage est choisie parmi une fonction de feu de croisement, une fonction de feu antibrouillard, une fonction de feu de route et une fonction de feu de jour.

6. Véhicule (V) comprenant des moyens d'analyse (MA) analysant une zone (ZA) située devant lui (V), **caractérisé en ce qu'**il comprend en outre au moins un dispositif d'éclairage (DE) selon l'une des revendications précédentes.

7. Véhicule selon la revendication 6, **caractérisé en ce qu'**il comprend deux dispositifs d'éclairage (DE) installés respectivement dans des parties avant droite et gauche.

8. Véhicule selon la revendication 6 ou 7, **caractérisé en ce qu'**il est de type automobile.

## Patentansprüche

1. Beleuchtungsvorrichtung (DE) für ein Fahrzeug (V) mit Analysemitteln (MA), die einen vor ihm (V) liegenden Bereich (ZA) analysieren, wobei die Vorrichtung (DA) eine erste Quelle (S1), die erste Photonen erzeugt, und einen Reflektor (RP) aufweist, der die erzeugten ersten Photonen in Richtung des Bereichs (ZA) reflektiert, so dass sie einen ersten Lichtstrahl (F1) bilden, der eine photometrische Beleuchtungsfunktion gewährleistet, **dadurch gekennzeichnet, dass** es außerdem i) eine vor dem Reflektor (RP) installierte Baugruppe umfasst, die in verschiedenen Winkelpositionen positionierbar ist, und eine zweite Quelle (S2), die zweite Photonen erzeugt, und eine Linse (LF) umfasst, die zwischen der zweiten Quelle (S2) und dem Bereich (ZA) angeordnet ist und mit den erzeugten zweiten Photonen ein zweites Lichtbündel (F2) bildet, das schmal ist und auf einen Unterbereich des Bereichs (ZA) zeigt, der von einer Winkelposition der Einheit abhängt, und ii) Steuermittel (MC), die die Winkelposition der Anordnung im Fall der Erfassung eines Hindernisses (OB) in einem Unterbereich mit bekannter Position in Bezug auf ein Koordinatensystem des Fahrzeugs (V) bestimmen, wobei die Steuermittel (MC) außerdem eine Winkelposition der Anordnung bestimmen, in der die Linse (LF) von einem Durchgangsort des ersten Lichtstrahls (F1) entfernt ist, um sie zu verstauen, wenn die zweite Quelle (S2) keine zweiten Photonen erzeugt.

2. . Vorrichtung nach Anspruch 1, **dadurch gekennzeichnet, dass** die Anordnung außerdem optische Mittel (MO) umfasst, die zwischen der zweiten Quelle (S2) und der Linse (LF) angeordnet sind und die erzeugten zweiten Photonen in Richtung der Linse (LF) kanalisieren.

3. . Vorrichtung nach Anspruch 1 oder 2, **dadurch gekennzeichnet, dass** die erste Quelle (S1) in einem oberen Teil (PS) des Reflektors (RP) installiert ist.

4. . Vorrichtung nach einem der Ansprüche 1 bis 3, **dadurch gekennzeichnet, dass** sie einen Träger (SE), mit dem die Baugruppe fest verbunden ist, und einen Elektromotor (ME) umfasst, der eine Achse (AX), mit der der Träger (SE) fest verbunden ist, in Drehung versetzt, und dass die Steuermittel (MC) eine Winkelposition der Achse (AX) bestimmen, die von der bekannten Position der Unterzone abhängig ist und die Winkelposition der Baugruppe definiert.

5. . Vorrichtung nach einem der Ansprüche 1 bis 4, **dadurch gekennzeichnet, dass** die photometrische Beleuchtungsfunktion aus einer Abblendlichtfunktion, einer Nebelleuchtfunktion, einer Fernlichtfunktion und einer Tagfahrlichtfunktion ausgewählt ist.

6. . Fahrzeug (V) mit Analysemitteln (MA), die einen vor ihm (V) liegenden Bereich (ZA) analysieren, **dadurch gekennzeichnet, dass** es außerdem mindestens eine Beleuchtungsvorrichtung (DE) nach einem der vorhergehenden Ansprüche umfasst.

7. . Fahrzeug nach Anspruch 6, **dadurch gekennzeichnet, dass** es zwei Beleuchtungsvorrichtungen (DE) umfasst, die jeweils in einem rechten und einem linken Vorderteil installiert sind.

8. . Fahrzeug nach Anspruch 6 oder 7, **dadurch gekennzeichnet, dass** es sich um ein Kraftfahrzeug handelt.

## Claims

1. Lighting device (DE) for a vehicle (V) comprising analysis means (MA) analysing a zone (ZA) situated in front of it (V), said device (DA) comprising a first source (S1) generating first photons and a reflector (RP) reflecting said generated first photons towards said zone (ZA) so that they form a first light beam (F1) ensuring a photometric lighting function **characterized in that** it further comprises i) an assembly installed in front of said reflector (RP), positionable in different angular positions and comprising a second source (S2) generating second photons and a lens (LF) interposed between said second source (S2) and said zone (ZA) and forming, with said generated second photons, a second narrow light beam (F2) pointing at a sub-zone of said zone (ZA) as a function of an angular position of said assembly and ii) control means (MC) determining the said angular position of the assembly in the event of detection of an obstacle (OB) in a sub-zone of known position with respect to a reference frame of the said vehicle (V), the said control means (MC) furthermore determining an angular position of the assembly in which the said lens (LF) is distant from a place of passage of the said first light beam (F1) in order to stow it away when the said second source (S2) does not generate second photons.

2. Device according to claim 1, **characterized in that** said assembly further comprises optical means (MO) interposed between said second source (S2) and said lens (LF) and channeling said generated second photons to said lens (LF).

3. Device according to claim 1 or 2, **characterized in that** said first source (S1) is installed in an upper part (PS) of said reflector (RP).

4. Device according to one of claims 1 to 3, **characterized in that** it comprises a support (SE) to which said assembly is fixedly attached and an electric motor (ME) driving in rotation a shaft (AX) to which said support (SE) is fixedly attached, and **in that** said control means (MC) determine an angular position of said shaft (AX) as a function of said known position of the sub-zone and defining said angular position of the assembly.

5. Device according to one of claims 1 to 4, **characterized in that** said photometric lighting function is selected from a low beam function, a fog light function, a high beam function and a daytime running light function.

6. Vehicle (V) comprising analysis means (MA) analyzing a zone (ZA) located in front of it (V), **characterized in that** it further comprises at least one lighting device (DE) according to one of the preceding claims.

7. Vehicle according to claim 6, **characterized in that** it comprises two lighting devices (DE) installed respectively in right and left front parts.

8. Vehicle according to claim 6 or 7, **characterized in that** it is of the automobile type.
